# EUROPÄISCHE PATENTSCHRIFT

(11) **EP 1 005 940 B1**
(45) Veröffentlichungstag und Bekanntmachung des Hinweises auf die Patenterteilung: **03.05.2006**
(21) Anmeldenummer: 99123698.5
(22) Anmeldetag: 29.11.1999
(51) Int. Cl.: B23H 7/20, G05B 19/4065

(54) **Verfahren und Vorrichtung zur Steuerung einer Senkerosionsmaschine**
Method and device for controlling and electroerosion machine
Méthode et appareil pour le contrôle d'une machine pour enfonçage par électroérosion

(30) Priorität: 04.12.1998 DE 19856098
(43) Veröffentlichungstag der Anmeldung: 07.06.2000
(60) Teilanmeldung: 04026586.0
(73) Patentinhaber: AGIE SA, 6616 Losone (CH)
(72) Erfinder: Marchesi, Alberto, 6670 Avegno (CH); Riva, Luciano, 28921 Verbania-Intra (IT)
(74) Vertreter: von Samson-Himmelstjerna, Friedrich

(56) Entgegenhaltungen:
- EP-A- 0 801 340
- DE-A- 3 246 268
- US-A- 5 453 933

## Beschreibung

Die vorliegende Erfindung betrifft ein Verfahren zur Steuerung einer Vielzahl von Bearbeitungsvorgängen auf einer Senkerosionsmaschine und eine hierfür geeignete Vorrichtung.

Ein solche Senkerosionsmaschine wird unter anderem zur Fertigung von Gußformen mit extrem hoher Bearbeitungspräzision eingesetzt. Dabei werden an einem oder mehreren Werkstücken eine Vielzahl von Bearbeitungsvorgängen, die ihrerseits in mehrere Arbeitsschritte und Arbeitszyklen unterschiedlicher Bearbeitungsstufen bzw. -phasen unterteilt sind, durchgeführt. Für die Durchführung dieser Bearbeitungsvorgänge werden je nach Bearbeitungsphase, wie etwa Grobbearbeitung oder Feinbearbeitung, häufig unterschiedliche Elektrodenkategorien, wie z.B. Schrupp- oder Schlichtelektroden, verwendet. Wechselt darüber hinaus die Geometrie der durchzuführenden Bearbeitung, so ist meistens auch die Elektrode auszutauschen. Es versteht sich daher, daß je nach Anzahl, Verschiedenartigkeit und Qualitätsansprüche der durchzuführenden Bearbeitungsvorgänge an einer modernen Senkerosionsmaschine, die Reihenfolge der durchzuführenden Arbeitsschritte und die jeweils notwendigen Elektroden einer genauen Festlegung bedarf, die in einem Steuerungsprogramm einer numerischen Steuerung der Senkerosionsmaschine vorhanden ist.

Beim Einrichten der Senkerosionsmaschine auf eine derart komplexe Bearbeitung muß der Maschinenbediener in der Steuerungsvorrichtung die Steuerungseingaben festlegen, welche bestimmen, welche Arbeitsschritte eines Bearbeitungsvorganges innerhalb welcher Abfolge mit welcher Elektrode auf welchem Werkstück durchzuführen sind. Dem Stand der Technik entsprechende Standard-Steuerungsverfahren der eingangs genannten Art benötigen hierfür Steuerungseingaben in Form abgeschlossener "Programme", sogenannte sequentielle Steuerungsprogramme. Ein solches Steuerungsprogramm liegt für jeden Zeitpunkt der Gesamtbearbeitung sämtliche Steuerdaten hinsichtlich der Bearbeitung, Bearbeitungssequenz und verwendeter Elektrode fest. Bei der Vielzahl der durchzuführenden Arbeitsschritte einer komplexen Bearbeitung auf mehreren Werkstücken und der hierfür notwendigen unterschiedlichen Elektroden verliert der Maschinenbediener leicht den Überblick, so daß Einstellungsfehler vorkommen können, die eine unsachgemäße, zumindest aber unökonomische, Durchführung der Bearbeitung zur Folge haben.

Zwar sind aus dem Stand der Technik auch Verfahren zum sog. objektorientierten Programmieren von Werkzeugmaschinen bekannt, z. B. aus Prof.Dr.Ing. Eversheim, Dipl.-Ing. Lenhart, Objektorientiert Programmieren, in: Industrie-Anzeiger 82/1991, Seite 38-40. im Unterschied zu sequentiellen Steuerungsprogrammen werden hier Programmbausteine verwendet, welche für eine Veränderung des Steuerungsprogrammes immer wieder verwendet werden können. Dabei wird lediglich eine objektorientierte Struktur des Quellprogramms vorgeschlagen. Ein Hilfsmittel zur Erstellung bestimmter Bearbeitungssequenzen wird dem Maschinenbediener jedoch nicht zur Verfügung gestellt

In der EP 0 801 314 A1 hat die Anmelderin ein Verfahren und eine Vorrichtung zur Steuerung einer Funkenerosionsmaschine bereitgestellt, bei welchen die Gesamtbearbeitung in einzelne Bearbeitungsobjekte, wie Werkzeug, Arbeitschritt, etc., unterteilt wird und der aktuelle Bearbeitungszustand eines Bearbeitungsobjektes vor, während und/oder nach der Gesamtbearbeitung überwacht und nach Bedarf für den Bediener angezeigt werden kann. Dabei ist es auch möglich, daß die Steuerung den Ablauf der Bearbeitung unter Berücksichtigung bestimmter Vorgaben, wie Vorgabe einer bestimmten Bearbeitungsstrategie, Vorgabe von Prioritäten einzelner Bearbeitungsobjekte, dem Bearbeitungszustand einzelner Bearbeitungszwecke, etc. ausführt.

Ferner ist aus der DE 32 46 268 A1 eine numerische Steuereinrichtung mit einer Vorrichtung zur Überwachung der verbleibenden Standzeit eines von mehreren Werkzeugen bekannt, so daß ein Werkzeug, dessen Standzeit noch nicht ausgeschöpft ist, bei Bedarf für weitere Bearbeitungsvorgänge ausgewählt werden kann. Damit soll erreicht werden, daß während der Bearbeitung möglichst wenige Unterbrechungen und damit Totzeiten wegen eines Werkzeugwechsels auftreten.

Die vorliegende Erfindung zielt darauf ab, Senkerosionsmaschinen hinsichtlich der Erstellung und Ausführung neuer Bearbeitungssequenzen zu verbessern.

Die Erfindung erreicht dieses Ziel durch die Gegenstände der Ansprüche 1 und 16. Bevorzugte vorteilhafte Ausgestaltungen der Erfindung sind in den jeweils abhängigen Ansprüchen beschrieben.

Danach schafft die Erfindung ein Verfahren zur Steuerung einer Vielzahl von Bearbeitungsvorgängen auf einer Senkerosionsmaschine mit mehreren gleichen oder verschiedenen Elektroden, wobei die Bearbeitungssequenz der Bearbeitungsvorgänge und die für jeden Bearbeitungsvorgang verwendete Elektrode unter Vorgabe folgender Kriterien ermittelt werden: (a) Vorgabe von Prioritäten von zu bearbeitenden Werkstücken, einer Gruppe von Bearbeitungen, von einzelnen Bearbeitungen, von Arbeitszyklen und/oder von Arbeitsschritten einer Bearbeitung; und (b) Vorgabe der Lebensdauer oder Verschleißgrenze der für die einzelnen Bearbeitungen, Arbeitszyklen bzw. Arbeitsschritte verwendeten Elektroden. Die Gesamtbearbeitung auf der Senkerosionsmaschine wird unter Berücksichtigung der ermittelten Bearbeitungssequenz ausgeführt. Zur Erstellung der Bearbeitungssequenzen weist eine erfindungsgemäße Vorrichtung zur Steuerung der Senkerosionsmaschine, z.B. eine CNC-Steuerung, auf: wenigstens einen Datenspeicher zum dauerhaften Speichern von Daten zur Beschreibung der Elektroden, die für die jeweiligen Bearbeitungsvorgänge benötigt werden; eine Benutzerschnittstelle zur Eingabe der zuvor genannten Kriterien zur Bestimmung der Bearbeitungssequenz an die Steuerungsvorrichtung; und einen Sequenzgenerator, der auf der Grundlage der genannten Kriterien und den Elektrodendaten die geeignete Bearbeitungssequenz zur Durchführung der Vielzahl der Bearbeitungsvorgänge automatisch generiert.

Die Erfindung bietet demnach dem Maschinenbediener ein probates Mittel, um selbst komplizierte Bearbeitungssequenzen auf einer Senkerosionsmaschine relativ einfach und in kurzer Zeit einzustellen. Bei der Sequenz- und damit der Steuerungsprogrammerstellung und der anschließenden Bearbeitung wird auch der Werkzeugverschleiß berücksichtigt, z.B. durch Vorgabe der Werkzeuglebensdauer in maximal möglichen Arbeitszyklen pro Bearbeitungsart, z.B. Schrupp- oder Schlichtzyklen. Wird die vorgegebene Verschleißgrenze eines Werkzeuges erreicht, so schließt bevorzugt ein erfindungsgemäßes Werkzeugverwaltungs- bzw. Managementsystem das Werkzeug für die weitere Bearbeitung aus oder deklassiert es in eine andere Werkzeugkategorie, wie weiter unten näher erläutert wird. Somit basiert die erfindungsgemäße Auswahl der günstigen Bearbeitungssequenz darauf, daß das zur Verfügung stehende Elektrodenmaterial optimal genutzt wird, d.h. jede Elektrode bis zum Ablauf ihrer individuellen Lebensdauer für mehrere Bearbeitungsvorgänge - mit oder ohne Unterbrechung - genutzt wird. Im übrigen wird durch die Vorgabe geeigneter Bearbeitungsprioritäten erreicht, daß eine gewisses Objekt vor einem anderen Objekt bis zu dessen Vollendung bearbeitet wird. Beispielsweise könnte ein bestimmtes Werkstück vorrangig zu bearbeiten sein, weil eine Kunde dieses Werkstück sofort benötigt, oder eine bestimmte komplizierte Bearbeitung vorgezogen werden, damit im Falle eines Mißlingens nicht ein bereits aufwendig bearbeitet Werkstück verloren geht. Ferner kann durch eine gezielte Prioritätenvorgabe erreicht wird, daß mehrere Bearbeitungen möglichst zeitsparend ausgeführt und etwaige Verfahrwege zwischen den Bearbeitungen, innerhalb welcher nicht erodiert werden kann, möglichst auf ein Mindestmaß reduziert werden.

Das erfindungsgemäße Verfahren und die entsprechende Vorrichtung sind auf alle Typen von Senkerosionsmaschinen übertragbar, bei welchen vergleichbare Verschleißerscheinungen der verwendeten Werkzeuge auftreten und/oder ähnliche Bearbeitungsprioritäten verwendbar sind.

Der Begriff "Bearbeitungsvorgang" ist vorliegend als Oberbegriff für alle auf einer Senkerosionsmaschine durchgeführten Arbeitsabschnitte zu verstehen. Dazu gehört die Durchführung einer bestimmten Einsenkung mit vorgegebener Einsenkungsgeometrie, welche als "Bearbeitung" bezeichnet wird. Jede Bearbeitung wird in mehreren Bearbeitungsstufen bzw. -phasen durchgeführt, z.B. nacheinander Schruppen, Vorschlichten, Schlichten und Feinschlichten. In jeder Bearbeitungsphase besteht eine Bearbeitung wiederum aus mehreren Arbeitsschritten, die zu sogenannten Arbeitszyklen zusammengefaßt sein können. Der Begriff "Bearbeitungssequenz" betrifft demnach im allgemeinen die Reihenfolge der nacheinander durchgeführten Bearbeitungsvorgänge, die je nach Art von Bearbeitungsvorgang, die Reihenfolge der nacheinander durchgeführten Bearbeitungen, der Arbeitszyklen mehrerer Bearbeitungen und/oder der Arbeitsschritte innerhalb eines Arbeitszyklus einer bestimmten Bearbeitung oder Kombinationen dieser Abfolgen sein kann.

Eine besonders bevorzugte Verfahrensvariante verwendet als Auswahlkriterium zur Durchführung mehrerer gleicher Bearbeitungen die sog. Verschleißverteilungsstrategie. Dabei werden die einzelnen Bearbeitungen nicht jeweils vollständig nacheinander abgearbeitet, sondern die nacheinander durchgeführten Bearbeitungsvorgänge sind derart auf die mehreren Bearbeitungen verteilt, daß eine gleichmäßige Verteilung des Elektrodenverschleißes auf eine bestimmte Anzahl von Arbeitszyklen und/oder Arbeitsschritten der mehreren Bearbeitungen erhalten wird. Bekanntlich erleidet eine Senkelektrode während der Bearbeitung einen Elektrodenabtrag, der auf die elektrophysikalische Natur des Erosionsprozesses zurückzuführen ist, so daß sich die Senkelektrode nach Durchführung einer bestimmten Anzahl von Arbeitsschritten verschleißt. Um daher eine möglichst homogene Bearbeitungsqualität auf allen Bearbeitungen zu erhalten, ist es vorteilhaft, nacheinander alle gleichartigen bzw. gleichrangige Arbeitsschritte der mehreren Bearbeitungen durchzuführen, z.B. zunächst alle ersten Arbeitsschritte der mehreren Bearbeitungen, dann alle zweiten Arbeitsschritte, u.s.w. bis alle letzten Arbeitsschritte der mehreren Bearbeitungen erledigt werden.

In diesem Zusammenhang werden bevorzugt die mehreren gleichen Bearbeitungen eines Verschleißverteilungsbereiches in einer bestimmten Reihenfolge, z.B. 1-2-3-4, nacheinander durchgeführt und nach Erreichen einer ersten (1) oder letzten Bearbeitung (4) in umgekehrter Reihenfolge, nämlich 4-3-2-1, so oft wiederholt, bis alle Arbeitsschritte der Bearbeitungen durchgeführt sind. Bei dieser Variante der Verschleißverteilungsstrategie vermeidet man, daß eine Bearbeitung gegenüber einer anderen privilegiert bearbeitet wird. Im Ergebnis werden mit der Verschleißverteilungsstrategie alle gleichen Bearbeitungen gleich gut (oder gleich schlecht) erodiert. Bei der vorgeschlagenen Variante "pendelt" die Elektrode gewissermaßen durch die Reihen gleichrangiger Arbeitsschritte mehrerer Bearbeitungen von der ersten zur letzten Bearbeitung, von der letzten zur ersten, u.s.w. bis zum Ende alle Arbeitsschritte der Bearbeitungen (sog. Pendelverfahren), so daß alle Bearbeitungen sehr rasch erledigt sind.

Bevorzugt wird weiterhin der maximale Elektrodenverschleiß einer Elektrode durch die maximale Anzahl von mit dieser Elektrode durchführbaren Arbeitszyklen oder Arbeitsschritte vorgegeben, wobei diese Anzahl gleichzeitig diejenige Gruppe von Arbeitszyklen bzw. Arbeitsschritten festlegt, innerhalb welcher die Verschleißverteilungsstrategie angewendet wird. Auf diese Weise werden z.B. mehrere Arbeitszyklen einer bestimmten Bearbeitungsphase zu sog. Verschleißverteilungs-Gruppen zusammengefaßt, die jeweils mit nur einer einzigen Elektrode bearbeitet werden. Nach Beendigung der Verschleißverteilungs-Gruppe ist die Lebensdauer dieser Elektrode für die jeweilige Bearbeitungsphase abgelaufen. Hiermit ist gewährleistet, daß in besonders übersichtlicher Form alle Elektroden vollständig genutzt werden.

Die Bearbeitungssequenz innerhalb einer solchen Verschleißverteilungs-Gruppe kann wiederum je nach Wunsch des Maschinenbedieners eingestellt werden, etwa vorzugsweise derart, daß innerhalb einer Gruppe von Arbeitszyklen nur ausgewählte Bereiche von Arbeitsschritten der Verschleißverteilungsstrategie unterzogen sind. Beispielsweise sollen nur die letzten beiden Arbeitsschritte mehrerer zu einer Verschleißverteilungs-Gruppe zusammengefaßter Arbeitszyklen von mehreren Bearbeitungen eine gleichmäßige Verteilung des Verschleißes der verwendeten Elektrode, vorzugsweise im oben genannten Pendelverfahren, anwenden.

Die Information über die Lebensdauer einer Elektrode der Senkerosionsmaschine, d.h. für maximal wie viele Arbeitszyklen oder Arbeitsschritte einer bestimmten Bearbeitung-phase eine Elektrode verwendbar ist, und den aktuellen Verschleißzustand kann auf verschiedene Art und Weise gewonnen werden. Im Falle einer Senkerosionsmaschine, bei welcher der Reihe nach mehrere Bearbeitungen mit jeweils mehreren Arbeitszyklen durchgeführt werden, wird hierzu bevorzugt der maximale Elektrodenverschleiß durch die maximale Anzahl von mit einer Elektrode durchführbaren Arbeitszyklen oder Arbeitsschritten einem Elektrodenverwaltungssystem vorgegeben, welches während der Bearbeitung die Anzahl der durchgeführten Arbeitszyklen bzw. Arbeitsschritte mitzählt und erfaßt. Die Information über die Elektrodenlebensdauer ermöglicht die Einrichtung einer automatischen Elektrodenverwaltung bzw. eines Elektroden-Managementsystems in der Steuerung der Senkerosionsmaschine. Wenn eine bestimmte Elektrode die vorgegebene Verschleißgrenze erreicht hat, so wird diese von dem Verwaltungssystem automatisch von der weiteren Bearbeitung ausgeschlossen oder einer anderen Bearbeitungsphase zugeordnet, d.h. einer andere Elektrodenkategorie, für welche die Elektrode noch eingesetzt werden kann. Die gesamte Elektrodenverwaltung erfolgt über eine intelligente CNC-Steuerung der Maschine.

Bevorzugt werden in dem Verwaltungssystem der Steuerungsvorrichtung die Elektroden durch einen aktuellen Bearbeitungszustand beschrieben, wobei dieser im Laufe der Bearbeitung in Abhängigkeit des Elektrodenverschleißes angepaßt wird. Die erfindungsgemäße Elektrodenverwaltung überwacht demnach den Verschleißzustand der verwendeten und z.B. in einem Elektrodenwechsler verfügbaren Elektroden und ordnet diesen in einem Speicherzustand Eigenschaften wie "brauchbar", "unbrauchbar" oder "deklassiert zu einer Schruppelektrode", etc. zu.

Für die Ausführung einer Bearbeitungssequenz benötigt die Steuerung auch Detailinformation über die in jedem Arbeitsschritt der Bearbeitungssequenz verwendeten Elektroden. Nach einem besonders bevorzugten Ausführungsbeispiel werden hierfür die Daten zur Beschreibung der Elektroden in der Steuerungsvorrichtung in folgende Gruppen unterteilt und dementsprechend verwaltet:
- abstrakte Elektrodendaten zur Beschreibung einer Normelektrode (V1, V2), welche Informationen zur Ausführung eines bestimmten Bearbeitungsvorganges enthalten; und
- spezifische Elektrodendaten zur Korrektur und/oder Anpassung der abstrakten Elektrodendaten an die tatsächlich verwendete Elektrode (R1, R2) oder an maschinenspezifische Merkmale,
wobei die Elektrodenbeschreibung durch Verknüpfen der abstrakten Elektrodendaten mit den spezifischen Elektrodendaten gewonnen wird.

Die abstrakten Elektrodendaten enthalten bereits alle wesentlichen Informationen über die Elektrode(n), die für die Ausführung einer bestimmten (einzelnen) Bearbeitung in einer bestimmten Bearbeitungsart geplant ist/sind. Es handelt sich dabei um die Beschreibung von Norm- bzw. Sollelektroden, welche für die Durchführung einer bestimmten gewünschten Bearbeitung benötigt werden, wobei diese abstrakte Beschreibung dazu alle bearbeitungsspezifischen Informationen der Elektrode enthält, wie z.B. die Elektroden-Grundgeometrie, die Elektroden-Grundform, das Elektrodenmaterial, die Elektrodenkategorie, z.B. ob Schrupp- oder Schlichtelektrode. Die spezifischen Elektrodendaten enthalten dann nur noch Korrekturdaten z.B. hinsichtlich der exakten Abmessung der tatsächlich verwendeten Elektrode, etwa das tatsächliche Untermaß, das von dem (angenommen) Untermaß der Sollwerkzeuges abweichen kann, sowie maschinenspezifische Daten, wie etwa die exakte Einspannposition der Elektroden, die aktuelle Position in einem Elektrodenmagazin bei automatischem Elektrodenwechsel und/oder der aktuelle Verschleißzustand der tatsächlich verwendeten Elektrode, so wie er im oben erwähnten Verwaltungssystem erfaßt ist. Die Idee besteht also darin, die Elektrodenbeschreibung zu generalisieren, d.h. losgelöst von der konkret an der Senkerosionsmaschine vorgefundenen Situation und den verwendeten reellen Elektroden in der Beschreibung eines Normwerkzeuges zu abstrahieren, so daß die Elektrodenbeschreibung bereits im Vorfeld der eigentlichen Bearbeitung außerhalb der Werkstatt durchgeführt werden kann. Bevorzugt ermittelt ein intelligenter Datengenerator bereits auf der Grundlage der abstrakten Elektrodendaten zusammen mit den erfindungsgemäßen Sequenz-Auswahlkriterien sowie Geometriedaten und in Datenbanken vorhandenen Technologie- und Prozeßparametersätzen automatisch die Bearbeitungssequenz mit den Technologie- und Prozeßparametern einzelner Arbeitsschritte der gewünschten Bearbeitung.

Ein weiteres Kriterium zur Auswahl und Bestimmung der Bearbeitungssequenz ist die Prioritätenvorgabe. Hierfür gibt es verschiedene bevorzugte Möglichkeiten, um die gewünschte Bearbeitungssequenz den jeweiligen Gegebenheiten anzupassen:

Bei einer Variante wird die Bearbeitungssequenz vorrangig durch die Prioritäten bestimmt ist, welche den Werkstükken, Gruppen von Bearbeitungen und einzelnen Bearbeitungen innerhalb einer Gruppe zugeordnet sind (Strategie "Workpiece"). Dabei wird als die Bearbeitung mit höchster Priorität innerhalb der Gruppe höchster Priorität auf dem Werkstück höchster Priorität zuerst vom ersten Arbeitsschritt bis zum letzten durchgeführt. Es findet dabei keine Verschleißverteilung der verwendeten Elektrode statt, weil immer nur eine Bearbeitung nach der anderen durchgeführt wird, d.h. die Bearbeitungsvorgänge nicht auf mehrere Bearbeitungen verteilt sind. Bevorzugt ist bei der Strategie "Workpiece" die Zählung des Elektrodenverschleißes aktiv, wobei z.B. nach Erreichen der Verschleißgrenze die jeweilige Elektrode in der Elektrodenverwaltung den Speicherzustand "unbrauchbar" erhält.

Bei einer weiteren Variante ist die Bearbeitungssequenz von Bearbeitungen, die in mehreren Bearbeitungsstufen bzw. -phasen durchgeführt werden, wie zuerst Schruppen, dann Vorschlichten, usw., und in jeder Bearbeitungsphase die Arbeitsschritte jeweils einer Bearbeitung zu Arbeitszyklen zusammengefaßt sind, vorrangig davon bestimmt ist, daß alle Arbeitsschritte aller Bearbeitungen in vorgegebener Rangordnung der Bearbeitungsphasen durchgeführt werden. Z.B. werden bei mehreren Einsenkungen zunächst alle Arbeitsschritte der Schruppzyklen, sodann alle Arbeitsschritte der Vorschlichtzyklen, u.s.w. durchgeführt. Je nach gewünschter Bearbeitungsqualität wird im Rahmen dieser Strategie noch unterschieden in: (a) Strategie "Phase", bei welcher in jeder Bearbeitungsphase nacheinander alle Arbeitsschritte von Anfang bis Ende einer Bearbeitung, dann alle Arbeitsschritte von Anfang bis Ende der nächsten Bearbeitung, usw. bis zur letzen Bearbeitung derselben Bearbeitungsphase durchgeführt werden; und (b) Strategie "Phase 0", bei welcher zunächst alle ersten Arbeitsschritte mehrerer Bearbeitungen derselben Bearbeitungsphase durchgeführt werden, und sodann ausgehend von der zuletzt erreichten Bearbeitung die übrigen Arbeitsschritte der Bearbeitungen wie in der Strategie "Phase" abgearbeitet werden. Weil diese Strategien "Phase" und "Phase 0" die Bearbeitungssequenz innerhalb einer bestimmten Bearbeitungsphase auf mehrere Bearbeitungen verteilen, ist es besonders vorteilhaft, hier zusätzlich die oben beschriebene Verschleißverteilungsstrategie anzuwenden. Beispielsweise wird unter Vorgabe einer bestimmten Verschleißgrenze eines Elektrodentyps, wie etwa der Schruppelektrode, eine Verschleißverteilungs-Gruppe von z.B. vier Schruppzyklen verteilt auf vier identische Bearbeitung gebildet. Innerhalb dieser Verschleißverteilungs-Gruppe ist es auch möglich, die Verschleißverteilungsfunktion nur auf die beiden ersten Arbeitsschritte pro Zyklus zu beschränken und im übrigen den Verlauf der "Phase 0" Strategie zu verwenden.

Ferner sind können Varianten vorteilhaft sein, bei welchen die Bearbeitungssequenz vorrangig durch die Priorität eines Werkstückes und der für das Werkstück vorgegebenen Strategie (Strategie "Piece") oder vorrangig durch die Prioritäten, welche einzelnen Arbeitsschritten zugeordnet sind (Strategie "Arbeitsschritt"). Die letztere bietet z.B. die Möglichkeit der Einstellung der Bearbeitungssequenz auf unterster Ebene der Bearbeitungsvorgänge, so daß der Maschinenbediener auch die Möglichkeit hat, der Steuerungsvorrichtung individuelle Abfolgen von Arbeitsschritten vorzugeben.

Besonders bevorzugt werden auch Kombinationen der genannten Strategien, wie etwa der Strategie "Workpiece" und der Strategie "Phase" oder "Phase 0" angewendet.

Bei einer ersten Kombinationsvariante wird die Bearbeitungssequenz vorrangig durch die Strategie "Workpiece" bestimmt, wobei die Werkstücke, die Gruppen bzw. die Bearbeitungen mit derselben Priorität anhand der Strategie "Phase" oder "Phase 0" bearbeitet werden (sog. Strategie "Workpiece-Phase" bzw. "Workpiece-Phase 0"). Diese kombinierte Strategie eignet sich insbesondere in Verbindung mit einer "kaskadenartigen" Deklassierung der verwendeten Elektroden, wobei diejenigen Elektroden, welche z.B. in einem Arbeitszyklus hoher Phase, z.B. einem Schlichtzyklus, der Bearbeitung mit höchster Priorität verwendet werden, können nach Ablauf der Lebensdauer noch für einen oder mehrere Arbeitszyklus niederer Phase, z.B. einem Schruppzyklus, für Bearbeitungen niedrigerer Priorität eingesetzt werden. Wenn in den durchzuführenden Arbeitszyklen außerdem eine Verschleißverteilungsstrategie gewünscht ist, kann diese selbstverständlich für Bearbeitungen gleicher Priorität eingestellt werden.

Bei einer zweiten Kombinationsvariante (Strategie "Phase-Workpiece" oder "Phase 0-Workpiece") ist die Bearbeitungssequenz gemäß der Strategie "Phase" oder "Phase 0" insoweit beeinflußt, als die Abfolge der Arbeitsschritte und ggf. die Reihenfolge der Unterteilung der Verschleißverteilungs-Gruppen die Priorität der Bearbeitungen nach der Strategie "Workpiece" berücksichtigen.

Im folgenden werden bevorzugte Ausführungsbeispiele der Erfindung anhand der beigefügten Zeichnung beschrieben. Daraus ergeben sich weitere Vorteile und Merkmale der Erfindung. In der Zeichnung zeigen:
- Fig. 1: eine schematische Draufsicht einer Spritzform mit mehreren Einsenkungen, die mit einer Senkerosionsmaschine herzustellen sind;
- Fig. 2a,b: eine schematische Darstellung eines Elektrodenwechslers einer Senkerosionsmaschine mit mehreren in Elektrodenhaltern angeordneten Senkelektroden;
- Fig. 3: eine schematische Darstellung einer Bearbeitungssequenz zur Durchführung mehrerer Bearbeitungen mit verschiedenen Elektroden;
- Fig. 4a,b: eine schematische Darstellung der Objektstruktur verschiedener Elektrodenfamilien und zugehöriger reeller bzw. virtueller Elektroden zur Verwendung in der Bearbeitungssequenz gemäß Fig. 3;
- Fig. 5: eine schematische Darstellung eines weiteren Beispiels einer erfindungsgemäßen Bearbeitungssequenz;
- Fig. 6: eine schematische Darstellung eines weiteren Beispiels einer erfindungsgemäßen Bearbeitungssequenz;
- Fig. 7: eine schematische Darstellung eines weiteren Beispiels einer erfindungsgemäßen Bearbeitungssequenz;
- Fig. 8: eine schematische Darstellung eines weiteren Beispiels einer erfindungsgemäßen Bearbeitungssequenz;
- Fig. 9: eine schematische Darstellung eines weiteren Beispiels einer erfindungsgemäßen Bearbeitungssequenz; und
- Fig. 10: eine schematische Darstellung eines Steuerungssystems zur Generierung und Durchführung von Bearbeitungssequenzen zur Durchführung einer oder mehrerer Werkstücksbearbeitungen.

Das erfindungsgemäße Steuerungs- und Elektrodenverwaltungskonzept einer Senkerosionsmaschine wird nun am Beispiel bevorzugter Bearbeitungssequenzen und den zugehörigen Strategien beschrieben. Diese sind jedoch nicht einschränkend zu verstehen. Je nach Auswahl und Gewichtung der einleitend beschriebenen Auswahlkriterien läßt sich eine nahezu unbegrenzte Anzahl von verschiedenartigen Bearbeitungssequenzen mit zugehöriger Technologiebeschreibung generieren.

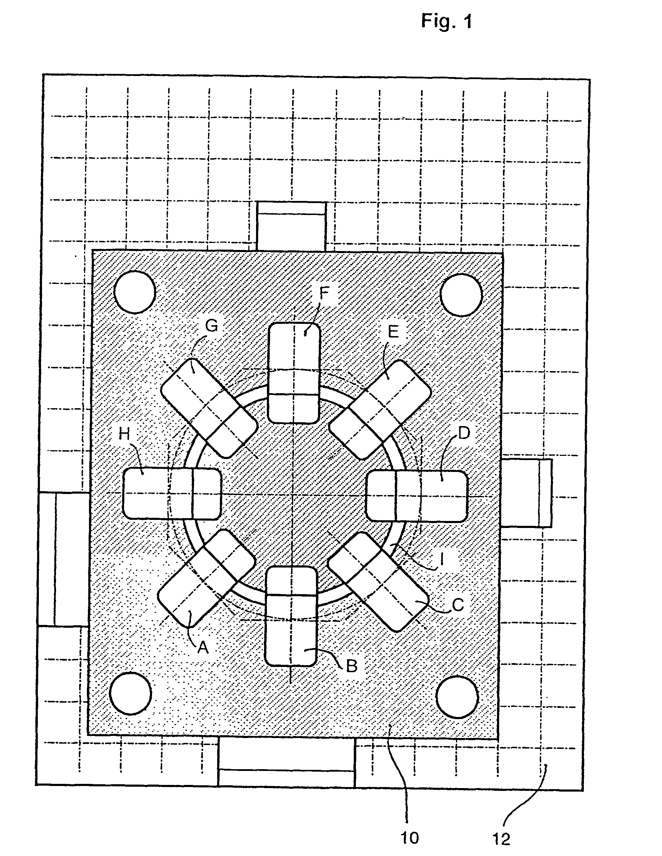

Im Zusammenhang mit den Figuren 1, 2a,b und 3 wird ein erstes Beispiel für die erfindungsgemäße Generierung einer bestimmten Bearbeitungssequenz an einem Werkstück mit mehreren Bearbeitungen, d.h. Einsenkungen derselben oder unterschiedlicher Geometrie, erläutert. Auf einer Senkerosionsmaschine soll beispielsweise eine geeignete Spritzform zur Serienproduktion eines Dämpferelements aus Gummi für eine Ausgleichskupplung hergestellt werden. Fig. 1 zeigt ein Werkstück 10, das die Endform einer Formhälfte einer solchen Spritzform hat. Mit der Senkerosionsmaschine sollen demnach im Werkstück 10 acht Einsenkungen A bis H, welche jeweils um 45° voneinander versetzt in einem Kreis angeordnet sind, sowie eine ringförmige Einsenkung I durchgeführt werden. Es sind dabei zwei Formhälften herzustellen, also die gleiche Anordnung von Einsenkungen A bis I auf einem weiteren (nicht gezeigten) Werkstück 10'. Das Werkstück 10 ist vorliegend auf einer Palette 12 montiert, die auf dem Werkzeugtisch der Senkerosionsmaschine angeordnet wird.

Die am Werkstück 10 geplanten Bearbeitungsvorgänge umfassen demnach insgesamt neun Bearbeitungen, die jeweils mindestens zwei Bearbeitungsphasen, nämlich eine Schrupp- und eine anschließende Vorschlichtphase, benötigen. Jede Phase umfaßt ihrerseits pro Bearbeitung mehrere Arbeitsschritte, die jeweils zu sog. Arbeitszyklen zusammengefaßt sind. Die Wahl der Bearbeitungssequenz, d.h. der Reihenfolge der Phasen, der abzuarbeitenden Arbeitsschritte eines Arbeitszyklus und der Arbeitszyklen pro Phase, hängt von der Wahl der Bearbeitungsstrategie ab, die u.a. von der Anzahl benötigter und verfügbarer Senkelektroden der unterschiedlichen Kategorien und deren Lebensdauer abhängt. Im vorliegenden Fall steht für den Maschinenbediener im Vordergrund, die Gesamtbearbeitung am Werkstück 10 möglichst schnell auszuführen, d.h. Stillstandszeiten zu vermeiden, und die verfügbaren Elektroden möglichst optimal auszunutzen, d.h. jeweils bis zu deren Verschleißgrenze einzusetzen. Beispielsweise ist die Anzahl verfügbarer Elektroden begrenzt durch die Aufnahmekapazität eines Elektrodenwechslers der Senkerosionsmaschine, der im Laufe der Gesamtbearbeitung eines Werkstückes die verwendeten Elektroden mehrmals austauscht.

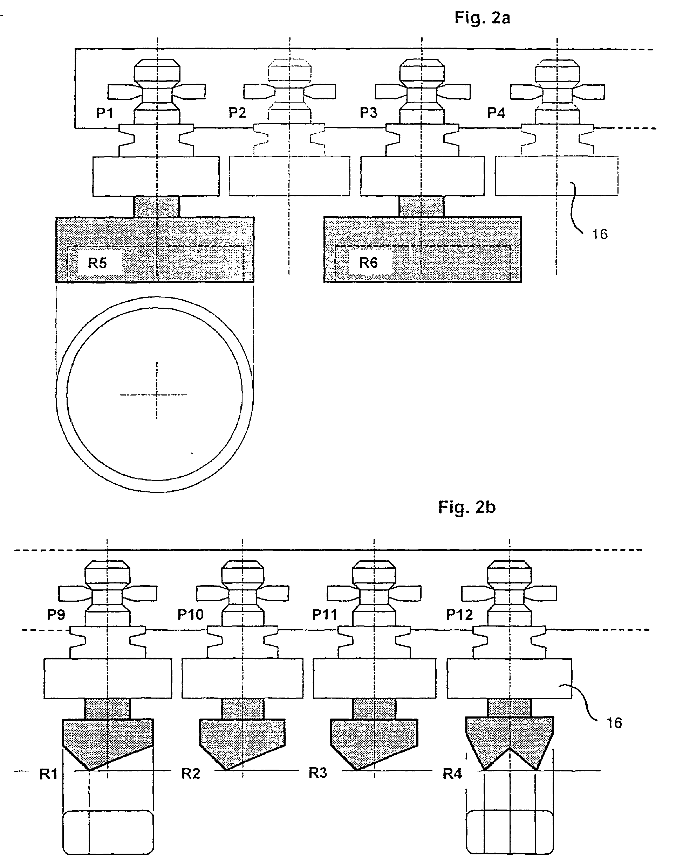

In den Figuren 2a und 2b ist ein solcher Elektrodenwechsler auszugsweise mit insgesamt zwölf Elektrodenhalter 16 in den Positionen P1 bis P12 dargestellt. Einige für die Bearbeitung des Werkstückes 10 aus Fig. 1 benötigten Elektroden sind so breit, daß sie mehr als einen Halterplatz im Elektrodenwechsler beanspruchen. Der gezeigte Elektrodenwechsler hat somit gerade Platz für insgesamt zehn Elektroden R1, R2, ...,R10, die zur Herstellung der beiden Formhälften gemäß Fig. 1 benötigt werden. Eine optimale Ausnutzung des Elektrodenmaterials ist dann gewährleistet, wenn man für die Gesamtbearbeitung von einer Formhälfte gemäß Fig. 1 fünf Senkelektroden verwendet, nämlich drei Elektroden zur Herstellung der eigentlichen Dämpferelement-Einsenkungen A bis H und zwei Elektroden für die Einsenkung I des Verbindungsringes.

Die Steuerung der Senkerosionsmaschine verfügt über ein Elektrodenverwaltungssystem, welches den aktuellen Verschleißzustand einer jeden Elektrode aufzeichnet und ggf. während der Bearbeitung ändert. Hierfür ist im Verwaltungssystem die Lebensdauer einer Elektrode vorgegeben, und zwar in Form der maximalen Anzahl durchführbarer Arbeitszyklen pro Phase einer speziellen Bearbeitung. Ferner ist das Elektrodenverwaltungssystem mit einer Zählereinrichtung ausgestattet, welche die Anzahl der durchgeführten Arbeitszyklen laufend mitzählt und in einem Speicherplatz des Verwaltungssystems deponiert. Erreicht nun eine bestimmte Elektrode die maximal zulässige Anzahl von Arbeitszyklen, so wird die Elektrode von dem Verwaltungssystem entweder für die weitere Verwendung ausgeschlossen, d.h. sie erhält den Speicherzustand "unbrauchbar", oder - falls möglich - wird die Elektrode für die Verwendung für eine andere Bearbeitungsphase in eine andere Elektrodenkategorie deklassiert. Im letzteren Fall aktiviert der Maschinenbediener im Elektrodenverwaltungssystem die Option "Elektrodenbewegung mit Deklassierung", womit er die Steuerungseinrichtung darauf einstellt, daß Vorschlichtelektroden nach Erreichen Ihrer Verschleißgrenze automatisch zu Schruppelektroden deklassiert werden und im weiteren Bearbeitungsablauf als solche eingesetzt werden.

Für die weitere Bestimmung der Bearbeitungssequenz zur Herstellung der genannten Formteile werden folgende Kriterien verwendet: Zunächst sollen alle ersten Arbeitsschritte der Schruppzyklen der Bearbeitungen A bis H durchgeführt werden, so daß hierfür die Wahl auf die einleitend beschriebene Strategie "Phase 0" fällt. Im Anschluß daran sollen die Schruppzyklen möglichst rasch erodiert werden, so daß die Steuerungsvorrichtung auf die Strategie "Phase" eingestellt wird. Während den Vorschlichtzyklen, welche im vorliegenden Fall die letzte Bearbeitungsphase darstellen, wird eine gleichmäßige Verteilung des Elektrodenverschleißes auf die verschiedenen Bearbeitungen A bis H angestrebt, um eine homogene Bearbeitungsqualität zu erhalten. Der Maschinenbediener wählt daher die vorstehend beschriebene Verschleißverteilungsstrategie und stellt die Steuerungsvorrichtung daher auf die Option "Verschleißverteilung auf der gesamten Bearbeitungsphase" ein. In dem Bereich der Verschleißverteilung wird der unvermeidbare Elektrodenverschleiß gleichmäßig auf gleichrangige Arbeitsschritte mehrerer Bearbeitungen derselben Phase verteilt. Der Maschinenbediener gibt noch die Lebensdauer bzw. Verschleißgrenze vor, in dem er im Elektrodenverwaltungssystem die maximal zulässige Anzahl von Arbeitszyklen pro Bearbeitungsphase einstellt. Diese Anzahl bestimmt gleichzeitig die Größe derjenigen Gruppe von Arbeitszyklen einer Phase, innerhalb welcher die Verschleißverteilungsstrategie angewendet wird (sog. Verschleißverteilungs-Gruppe). Jede Verschleißverteilungs-Gruppe wird mit einer einzigen Elektrode der zugehörigen Kategorie bearbeitet; nach Beendigung der Gruppe hat die Elektrode ihre Verschleißgrenze zumindest für diese Phase erreicht. Mit einer Vorschlichtelektrode können beispielsweise vier Vorschlichtzyklen mit Verschleißverteilung ausgeführt werden; danach hat die Elektrode die Verschleißgrenze als Vorschlichtelektrode erreicht. Dieselbe Elektrode kann theoretisch jedoch noch vier oder mehr Schruppzyklen ausführen, d.h. als Schruppelektrode. Danach ist die Elektrode für die weitere Verwendung generell unbrauchbar.

Die Spezifikation für die Bearbeitungssequenz zur Durchführung der kreisförmigen Einsenkung I in Fig. 1 erfolgt auf ähnliche Weise. Die Einsenkung I soll mit einer einzigen Schruppelektrode und einer einzigen Vor schlichtelektrode ausgeführt werden.

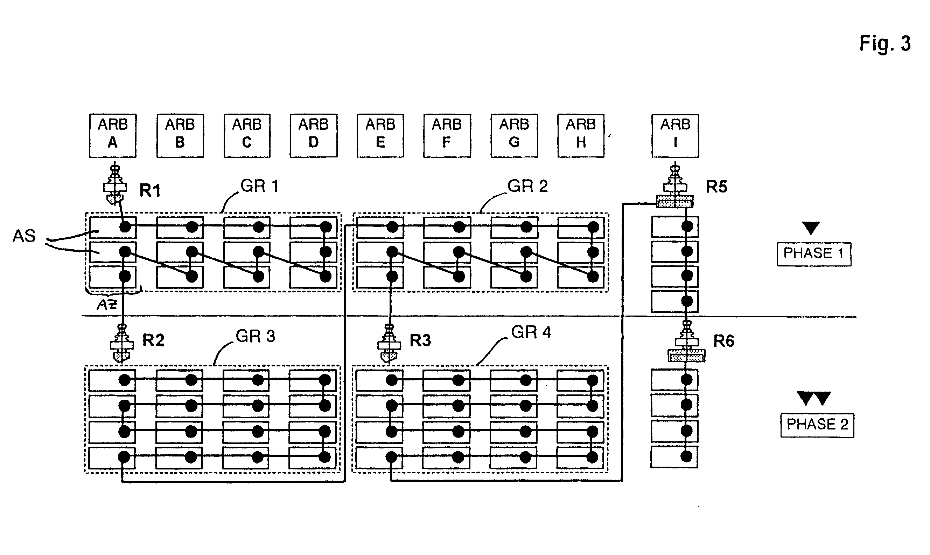

Anhand dieser Vorgaben generiert die Steuerungsvorrichtung automatisch die gesamte Sequenz der Arbeitszyklen zur Herstellung der acht Dämpferelement-Einsenkungen A bis H und der kreisförmigen Einsenkung I im Werkstück 10 gemäß Fig. 1, zusammen mit der Festlegung der jeweils zu verwendenden Elektroden. In Fig. 3 ist diese Bearbeitungsequenz schematisch dargestellt. Die Einsenkungen A bis I sind jeweils mit ARB A bis ARB I gekennzeichnet. Für jede der Einsenkungen A bis H ist ein Schruppzyklus (Bearbeitungsphase 1) und ein Vorschlichtzyklus (Bearbeitungsphase 2) bestehend jeweils aus drei bzw. vier Arbeitsschritten AS vorgesehen. Aufgrund der oben vorgegebenen Verschleißgrenze von maximal vier Arbeitszyklen AZ für die Schrupp- und Vorschlichtelektroden sind die Schrupp- und Vorschlichtzyklen jeweils zu Gruppen GR1 bis GR4 von vier Arbeitszyklen AZ zusammengefaßt, welche jeweils mit einer einzigen Elektrode bearbeitet werden.

Gemäß der Sequenz in Fig. 3 holt die Steuerungsvorrichtung zuerst eine Elektrode R1 aus der Position P9 im Elektrodenwechsler aus Fig. 2. Mit dieser werden zunächst die Schruppzyklen der Einsenkungen A, B, C und D innerhalb der ersten Gruppe GR1 durchgeführt, und zwar gemäß der vorgegebenen Strategie "Phase 0" zuerst alle ersten Arbeitsschritte AS der vier Einsenkungen A, B, C und D, danach die übrigen Arbeitsschritte AS, wobei in der Reihenfolge der Einsenkungen D, C, B und A nacheinander die zweiten und dritten Arbeitsschritte AS eines jeden Arbeitszyklus AZ abschlossen werden, bevor die folgende Einsenkung weiter bearbeitet wird. Nach Abschluß der ersten Arbeitszyklen-Gruppe GR1 wird die Elektrode R1 wieder im Elektrodenwechsler abgelegt und automatisch durch eine Elektrode R2 aus der Position P10 ausgetauscht. Gleichzeitig speichert das Elektrodenverwaltungssystem der Steuerung den Zustand der Elektrode R1 als "unbrauchbar". Weitere Informationen über den Verschleißzustand der übrigen Elektroden gewinnt das Elektrodenverwaltungsystem über die Vorgabe der maximal durchführbaren Arbeitszyklen und der laufenden Erfassung der bereits durchgeführten Arbeitszyklen.

Mit der neuen Elektrode R2 werden sodann die Vorschlichtzyklen der Einsenkungen A, B, C und D innerhalb der Gruppe GR3 ausgeführt, und zwar gemäß der eingestellten Verschleißverteilungsstrategie im sog. Pendelverfahren, bei welcher zuerst alle ersten Arbeitsschritte AS der Einsenkungen A, B, C und D, dann alle zweiten Arbeitsschritte AS in umgekehrter Reihenfolge D, C, B, A, usw. bis zur Beendigung der letzten Arbeitsschritte AS in der Gruppe GR3 ausgeführt werden. Nun wird die zunächst als Vorschlichtelektrode eingesetzte Elektrode R2 von der Elektrodenverwaltung zur Kategorie Schruppelektrode deklassiert, weil sie bereits die vier maximal zulässigen Vorschlichtzyklen ausgeführt hat. Die Elektrode R2 wird nun weiter als Schruppelektrode zur Bearbeitung der Einsenkungen E, F, G und H verwendet, und zwar nach der für den Schruppzyklus geltenden Strategie "Phase 0", also nach derselben Bearbeitungssequenz wie in der Gruppe GR1. Nach Durchlauf der Arbeitszyklen-Gruppe GR2 hat die Elektrode R2 auch die Verschleißgrenze einer Schruppelektrode erreicht und wird daher von der Elektrodenverwaltung als generell "unbrauchbar" deklassiert. Schließlich werden die Vorschlichtzyklen der Einsenkungen E, F, G und H mit einer neuen Elektrode R3 aus dem Elektrodenwechsler ausgeführt. Danach wird auch die Elektrode R3 deklassiert; diese würde sich theoretisch noch als Schruppelektrode für die Bearbeitung eines weiteren Werkzeuges eignen.

Nachdem alle Dämpferelement-Einsenkungen A bis H erodiert sind, holt die Steuerungsvorrichtung eine weitere Elektrode R5 aus der Position P1 im Elektrodenwechsler und führt gemäß der Sequenz in Fig. 3 den vorgesehenen Schruppzyklus und im Anschluß daran mit einer weiteren Elektrode R6 den Vorschlichtzyklus der Einsenkung I aus.

Für die Durchführung einer derartigen Bearbeitungssequenz benötigt die CNC-Maschinensteuerung außerdem Steuerungseingaben hinsichtlich der verwendeten Elektrodentypen, der Geometriedaten der Einsenkungen, dem Qualitätsziel und der Bearbeitungsgeschwindigkeit, sowie der Prozeß- und Technologieparameter, wie Erosionsstrom, Impulsform, Impulsfrequenz, Spülungsdaten, etc.. Zusammen mit den oben erwähnten Vorgaben zur Bearbeitungssequenz wird anhand dieser Daten die Abfolge der einzelnen Arbeitsschritte mit den jeweiligen Technologie- und Prozeßdaten festgelegt. Die vorliegende Erfindung gibt dem Maschinenbediener außerdem ein Hilfsmittel, die Beschreibung verschiedenartiger Elektrodenkategorien zu rationalisieren. Hierfür werden unterschiedliche Elektrodenkategorien zur Durchführung einer bestimmten Bearbeitung, z.B. einer der Einsenkungen A bis I von Fig. 1, zu einer sogenannten Elektrodenfamilie zusammengefaßt und als Objekt in einer objektorientierten Struktur der Steuerung der Senkerosionsmaschine betrachtet. Demnach gehören all diejenigen Elektroden zur selben Elektrodenfamilie, welche zumindest dieselbe Grundgeometrie und ein vorgegebenes Untermaß haben, mit dem dieselben Endabmessungen erzielt werden können. Ein Objekt der Elektrodenfamilie kann für mehrere (gleiche) Bearbeitungen eingesetzt werden, also für alle Bearbeitungen, bei denen eine entsprechende Einsenkungsgeometrie erreicht werden soll.

Erfindungsgemäß sind zur Elektrodenbeschreibung drei Datenbereiche in der Steuerung vorgesehen:
a) Daten der Elektrodenfamilie (sog. Familiendaten)
   Die Familiendaten enthalten Informationen, die für alle Elektroden einer bestimmten Elektrodenfamilie gelten. Hierzu gehören im wesentlichen Angaben über: Elektrodenmaterial (mit der Wahl des Elektrodenmaterials wird die Materialpaarung (Elektrode-Werkstück) der Erosion festgelegt, was es der Steuerung ermöglicht, automatisch die passenden Technologieparameter zu bestimmen. Sollten jedoch die Mitglieder einer Elektrodenfamilie unterschiedliche Materialien haben, so müssen die von den auf Familienebene definierten Materialdaten abweichende Elektroden auf einer nachfolgenden Datenebene spezifiziert werden); sowie Elektroden-Grundgeometrie, d.h. Angaben der Grundform (z.B. prismatische, lamellenförmige, spitze oder Standardformen) und Angaben der geometrischen Grundabmessungen.
b) abstrakte Elektrodendaten (Daten der sog. virtuellen Elektroden)
   Die abstrakten Elektrodendaten enthalten Informationen zu virtuellen Elektroden, die für die Ausführung einer bestimmten Bearbeitung in einer bestimmten Bearbeitungsart bzw. -phase geplant sind. Es handelt sich um die Beschreibung einer Norm- bzw. Sollelektrode für die Durchführung der bestimmten Bearbeitung, welche bereits alle wesentlichen bearbeitungsspezifischen Informationen enthält. Zu den abstrakten Elektrodendaten gehören z.B. Angaben über: Elektrodenkategorie für eine spezielle Bearbeitungsart, z.B. Schrupp-, Vorschlicht-, Schlicht- oder Feinschlichtelektrode; Anzahl von geplanten virtuellen Elektroden pro Bearbeitungsart; theoretisches Untermaß bzw. Normuntermaß (Untermaß = Durchmesser der Endform minus Durchmesser der Elektrode), welches vom Untermaß der tatsächlich verwendeten (reellen) Elektrode geringfügig abweichen kann (Aus der Anzahl der Elektroden und dem Solluntermaß bestimmt die Steuerung zusammen mit dem geforderten Qualitätsziel automatisch die Impulssequenz und die Anzahl der Impulse pro Elektrode); und die Elektrodenlebensdauer ausgedrückt in der Anzahl der maximal durchführbaren Arbeitszyklen pro Bearbeitungsphase.
c) spezifische Elektrodendaten (Daten der sog. reellen Elektroden)
   Es handelt sich hier im wesentlichen um Korrekturdaten gegenüber den abstrakten Elektrodendaten der virtuellen Elektroden zur Anpassung an die tatsächlich verwendeten reellen Elektroden zur (einfachen oder mehrfachen) Durchführung einer bestimmten Bearbeitung. Diese Korrekturdaten betreffen einerseits elektrodenspezifische Eigenschaften, z.B. das tatsächliche Untermaß der verwendeten Elektrode oder Angaben zum aktuellen Elektrodenverschleißzustand, und andererseits maschinenspezifische Eigenschaften, wie Angaben zum Modus des Elektrodenwechsels und die Position der Elektrode auf einem automatischen Elektrodenwechsler oder Roboter, Angaben zur Montage der Elektrode in der Senkerosionsmaschine, z.B. ob Montage am Elektrodenkopf oder auf dem Werkzeugtisch, Korrekturwerte der Elektrodenposition zur Festlegung des genauen Nullpunktes der Elektrode bezogen auf den Nullpunkt des Elektrodenkopfes, etc..

Die Gesamtinformation einer für einen bestimmten Arbeitszyklus zu verwendenden Elektrode ergibt sich aus der Summe der spezifischen Elektrodendaten der reellen Elektrode, der abstrakten Elektrodendaten der virtuellen Elektrode und der übergeordneten Familiendaten. Diese Art der Aufteilung und Gruppierung der Elektrodenbeschreibung begünstigt die Generierung verschiedener Bearbeitungssequenzen, weil sie eine flexible und schnelle Anpassung der Elektrodenbeschreibung an eine veränderte Bearbeitungssequenz und die hierfür notwendigen z.B. neuen Elektroden ermöglicht. Wird z.B. eine neue reelle Elektrode verwendet, die auf einer neuen Position im Elektrodenwechsler untergebracht ist, so reicht es, lediglich die reellen Daten dieser Elektrode in die Steuerung einzugeben und diese mit den bereits vorhandenen virtuellen Daten des gewünschten Bearbeitungstyps zu verknüpfen.

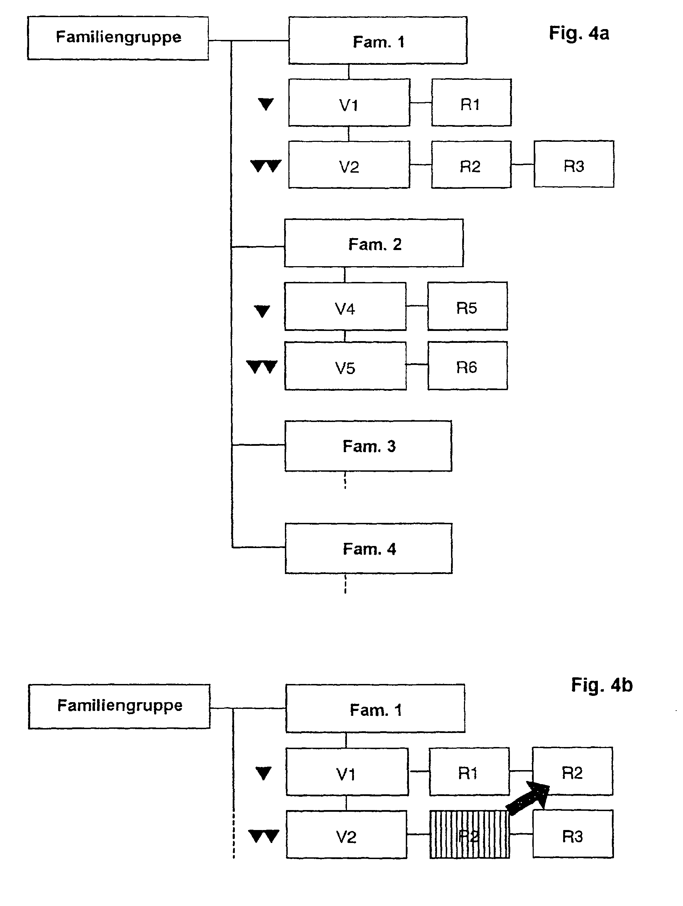

Die Fig. 4a und 4b zeigen die Datenstruktur der Elektroden, wie sie für die Bearbeitungssequenz in Fig. 3 verwendet werden, und zwar zu Beginn der Bearbeitung. Von den vier Elektrodenfamilien in Fig. 4a sind dabei nur die Elektrodenfamilen Fam. 1 und Fam. 2 relevant. In der Elektrodenfamilie Fam. 1 ist die für die Arbeitszyklen-Gruppe GR1 verwendete Schruppelektrode durch die Zuordnung R1, V1 festgelegt; die beiden Vorschlichtelektroden für die Arbeitszyklen-Gruppen GR3 und GR4 basieren auf der Kombination der Daten der reellen und virtuellen Elektroden R2, V2 sowie R3, V2. Ferner sind die Schrupp- und Vorschlichtelektrode zur Durchführung der Bearbeitung I durch die Datenkombination R5, V4 bzw. R6, V5 definiert. Im Rahmen der objektorientierten Struktur der gesamten Steuerung der Senkerosionsmaschine ist eine Elektrodenfamilie Fam. 1 und Fam. 2 das weitere Objekt "Familien-Gruppe" übergeordnet. Dies hat zur Folge, daß die für die Familien-Gruppe festgelegten Maßnahmen generell auch für alle Elektrodenfamilien Fam. 1 bis Fam. 4 gelten.

Ferner veranschaulicht die Fig. 4b die oben erwähnte Deklassierung der Elektrode R2 im Laufe der Bearbeitungsequenz von Fig. 3. Die dortige reelle Elektrode R2 ist zunächst als Vorschlichtelektrode ∇∇ mit der Datenkombination R2, V2 innerhalb der Elektrodenfamilie Fam. 1 definiert. Nach Ablauf ihrer Lebensdauer (festgelegt in den Daten der virtuellen Elektrode V2) wird R2 durch Deklassierung zu einer Schruppelektrode ∇. Die Gesamtbeschreibung als Schruppelektrode erhält man einfach dadurch, daß ihr die Daten der bereits vorhandenen virtuellen Elektrode V1 zugeordnet werden, welche erfindungsgemäß alle Informationen zur Ausführung eines Schruppvorganges enthält.

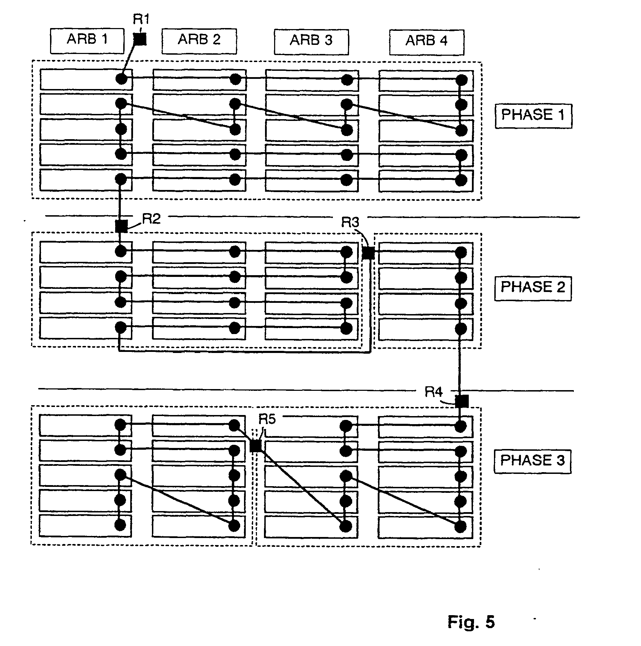

In den Fig. 5 bis 9 sind weitere Beispiele für Bearbeitungssequenzen, welche nach den erfindungsgemäßen Kriterien generiert sind, dargestellt.

Die Bearbeitungssequenz mit fünf Elektroden R1 bis R5 gemäß Fig. 5 gleicht derjenigen in Fig. 3. Auch dort wird die Strategie "Phase 0" zur Durchführung von vier Bearbeitungen ARB 1 bis ARB 4 der Steuerungsvorrichtung vorgegeben. Damit werden in jeder Phase 1, 2 und 3 zunächst immer die ersten Arbeitsschritte aufeinanderfolgender Arbeitszyklen der Bearbeitungen ARB 1 bis ARB 4 durchgeführt. Für die Kriterien der Elektrodenlebensdauer und der Verschleißverteilung der Elektroden sind jedoch folgende Einstellungen gewählt: Für die Phase 1 (Schruppen) ist eine Verschleißgrenze von maximal vier Schlichtzyklen vorgegeben, wobei die gleichmäßige Verschleißverteilung nur auf den beiden letzten Arbeitsschritten der jeweiligen Arbeitszyklen erwünscht ist; in der Phase 2 (Vorschlichten) sind maximal drei Zyklen der Vorschichtelektrode vorgesehen, wobei die gleichmäßige Verschleißverteilung auf allen Arbeitszyklen innerhalb der Verschleißverteilungs-Gruppen erfolgen soll; und in der Phase 3 (schlichten) sind maximal zwei Schlichtzyklen pro Elektrode vorgesehen, wobei die Verschleißverteilung in den letzten drei Arbeitsschritten der jeweiligen Arbeitszyklen gesperrt ist. Aufgrund dieser Sequenzvorgaben generiert die Steuerungsvorrichtung die in Fig. 5 dargestellte Bearbeitungssequenz, wobei an den durch ein Quadrat symbolisch dargestellten Stellen von der Elektrodenverwaltung automatisch ein Elektrodenwechsel durchgeführt wird.

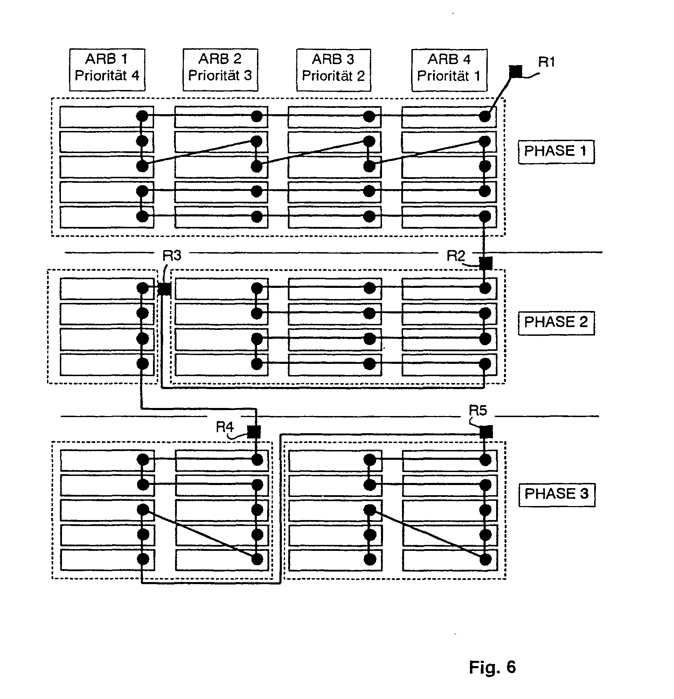

Die in Fig. 6 dargestellte Bearbeitungsstrategie ist mit derjenigen von Fig. 5 in sofern vergleichbar, als dort dieselbe Einstellung der Elektrodenlebensdauern und der Verschleißverteilung gewählt ist und auch gemäß der Strategie "Phase 0" immer die ersten Arbeitsschritte der Bearbeitungen nacheinander durchgeführt werden. Allerdings soll hier die Durchführung der Arbeiten ARB 1 bis ARB 4 mit einer von ARB 4 zu ARB 1 stufenweise abnehmenden Priorität erfolgen, so daß vom Maschinenbediener die Prioritätsstrategie "Phase 0-Workpiece" eingestellt ist. Im Unterschied zur reinen "Phase 0" Strategie in Fig. 5 werden dann die Arbeitsschritte innerhalb der Verschleißverteilungs-Gruppen in der Reihenfolge der Prioritäten der Bearbeitungen, d.h. von ARB 4 zu ARB 1, durchgeführt. Außerdem erfolgt die Aufteilung der Verschleißverteilungs-Gruppen in jeder Phase in der Reihenfolge der Prioritäten der Bearbeitungen.

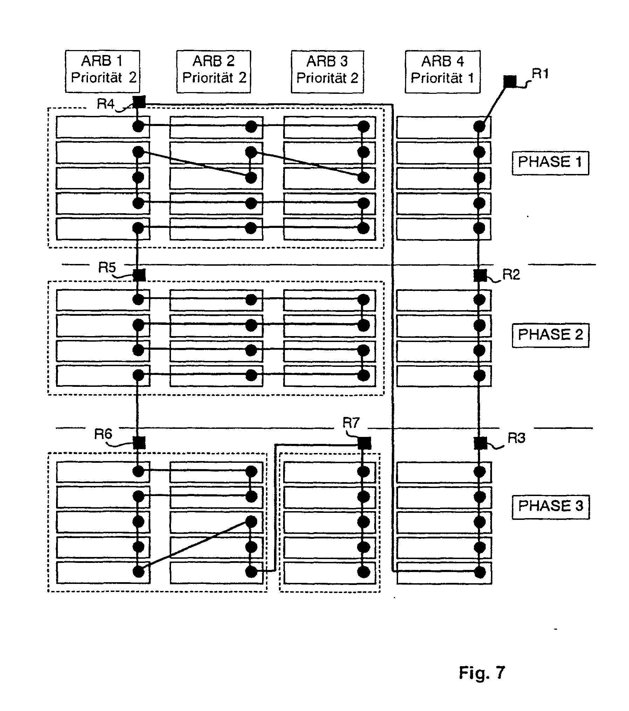

Auch die in Fig. 7 dargestellte Bearbeitungssequenz mit den Elektroden R1 bis R7 basiert auf der gleichen Lebensdauer- und Verschleißverteilungseinstellung wie die Bearbeitungssequenzen der Fig. 5 und 6. Abweichend ist jedoch die Vorgabe von Prioritäten der Bearbeitungen, nämlich die vorrangige Durchführung der Bearbeitung ARB 4 (Priorität: 1) gegenüber den anderen Bearbeitungen ARB 1 bis ARB 3 ((Priorität: 2). Die letztgenannten Bearbeitungen ARB 1 bis ARB 3 mit gleicher Priorität sollen entsprechend der Vorgabe der Bearbeitungssequenz in Fig. 5 abgearbeitet werden. Die Einstellung der Bearbeitungssequenz beruht demnach auf der Strategie "Workpiece-Phase 0", wonach zuerst alle Arbeitszyklen der Phasen 1 bis 3 der vorrangigen Bearbeitung ARB 4 durchgeführt werden und dann die übrigen Bearbeitungen ARB 1 bis ARB 3 gemäß Strategie "Phase 0" mit der eingestellten Verschleißverteilung (vgl. Fig. 5) abgearbeitet werden.

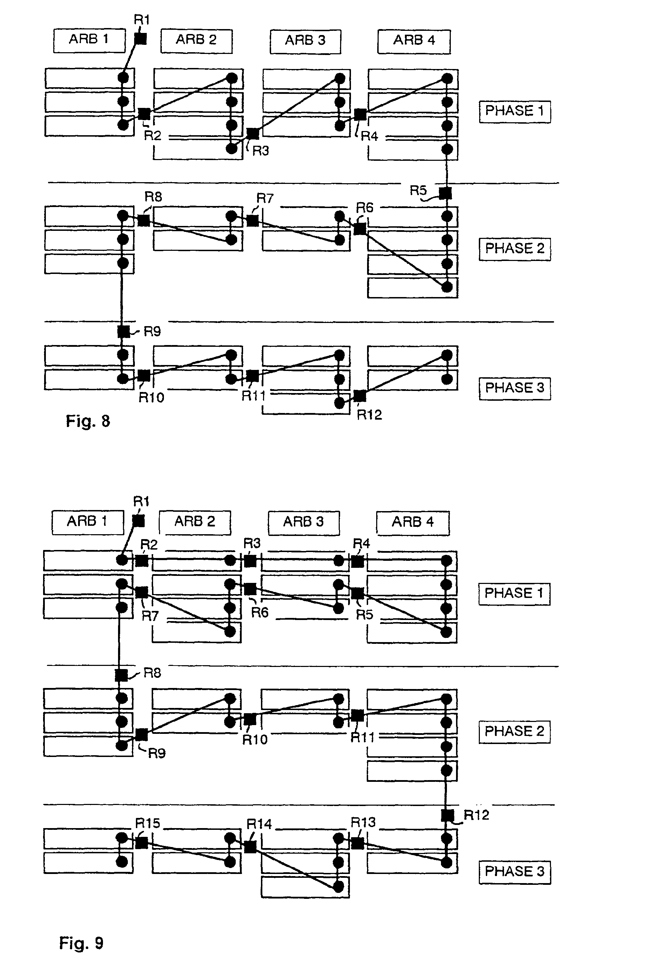

Schließlich zeigen die Fig. 8 und 9 Bearbeitungssequenzen zur Durchführung von unterschiedlichen Bearbeitungen ARB 1 bis ARB 4. Bei diesen Sequenzen findet keine Einstellung der Verschleißverteilung statt. Die Bearbeitungssequenz in Fig. 8 basiert auf der Einstellung der Strategie "Phase" und die Sequenz in Fig. 9 auf der Strategie "Phase 0".

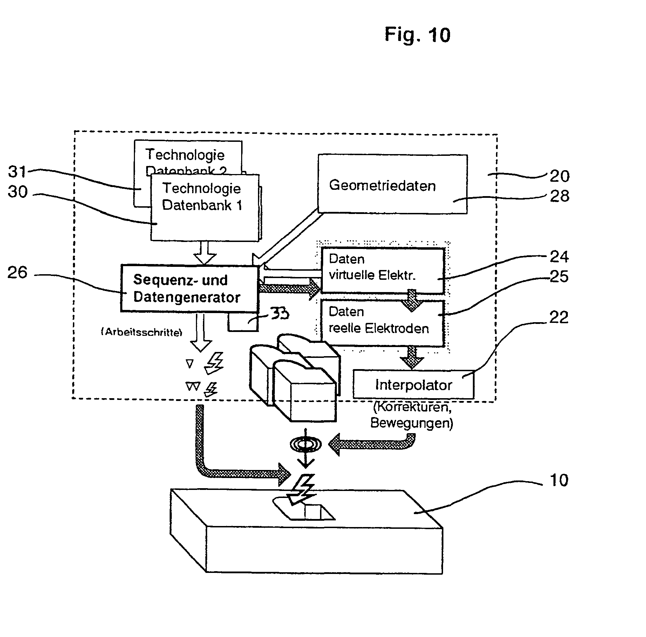

Die erfindungsgemäße Steuerungsvorrichtung basiert auf einer CNC-Steuerung. In Fig. 10 ist schematisch ein Steuerungssystem 20 einer CNC-Steuerung der Senkerosionsmaschine zur Generierung und Ausführung einer Bearbeitungssequenzen zur Durchführung verschiedener Bearbeitungen auf einem Werkstück 10 dargestellt. Das Steuerungssystem 20 verfügt über einen Interpolator 22, welche die zur Werkstücksbearbeitung notwendigen, die Senkkonturen bestimmende Relativbewegung zwischen Werkstück und Senkelektrode steuert. Hierfür ist ein z.B. mit dem Werkzeugtisch gekoppelter im x- ,y-, z-Hauptachsenrichtung bewegbarer Antrieb vorgesehen, der die Steuersignale des Interpolators 22 empfängt. Das Steuerungssystem 20 benötigt ein Steuerungsprogramm, das neben Lagedaten des oder der Werkstücke, Geometrie- und Konturdaten der gewünschten Einsenkungen auch Technologiedaten, wie Bearbeitungsgenauigkeit, Geschwindigkeit, Rauheit, etc., und Prozeßparameterdaten, wie Erosionsstrom, Impulsstrom, Impulsfrequenz, Spülungsdaten, etc., enthält, und zwar für jeden Arbeitsschritt einer vorgegebenen Bearbeitungssequenz. Im erfindungsgemäßen Steuerungssystem 20 der Senkerosionsmaschine wird die Bearbeitungssequenz der Arbeitsschritte mit den zugehörigen Steuerungsdaten automatisch generiert. Hierzu weist das Steuerungssystem 20 eine (nicht dargestellte) graphische Schnittstelle auf, über welche Vorgaben zur Erstellung der Bearbeitungssequenz, wie Bearbeitungsprioritäten, Lebensdauer der Elektroden, Verschleißverteilungs-Strategien, in entsprechenden Fenstern ausgewählt und eingestellt werden. Ferner sind die Daten der virtuellen Elektroden (abstrakte Elektrodendaten) in einem Speicher 24 und die Daten der reellen Elektroden (spezifische Elektrodendaten) in einem Speicher 25 des Steuerungssystems 20 abgelegt. Des weiteren sind in einem Speicher 28 die Geometrie- und Konturdaten verschiedener Bearbeitungen sowie in Datenbanken 30 und 31 verschiedene Technologie- und Prozeßparametersätze zur Durchführung der Bearbeitungen abgelegt. Ein intelligenter Sequenz- und Datengenerator 26 bestimmt nun auf der Grundlage der vorgegebenen Sequenzvorgaben, der Daten der virtuellen Elektroden aus dem Speicher 24, der Geometriedaten aus dem Speicher 28 und der Technologie- und Prozeßdaten aus den Datenbanken 30, 31 automatisch eine bestimmte Abfolge von durchzuführenden Arbeitsschritten mit den jeweiligen Technologie- und Prozeßparameterdaten. Dieser Zuordnungsschritt ist in Fig. 5 schematisch durch die hellen Pfeile dargestellt.

Ferner verfügt die CNC-Steuerung der Senerosionsmaschine über eine Elektrodenverwaltungseinheit (33) zur Überwachung der Elektrodenlebendauer und zum Ausschluß oder der Deklassierung einer abgelaufenen Elektrode auf die zuvor beschriebene Art und Weise.

Im Moment der Ausführung der auf diese Weise definierten Arbeitsschritte (vgl. dunkle Pfeile in Fig. 5) greift der Interpolator 22 auf die im Speicher 25 abgelegten reellen Daten und liest die Daten zur Steuerung der Elektrodenbewegung aus. Dabei gehen die Daten der reellen Elektroden als Korrekturwerte in die bereits definierten Arbeitsschritte ein: die Korrekturwerte bestimmen z.B. die Nullpunkt-Position der reellen Elektroden bezogen auf den Nullpunkt des Elektrodenkopfes; das tatsächliche Untermaß der verwendeten Elektroden dient der Steuerung der Planetärbewegungen.

## Patentansprüche

1. Verfahren zur Steuerung einer Vielzahl von Bearbeitungsvorgängen auf einer Senkerosionsmaschine mit mehreren gleichen oder verschiedenen Elektroden (R1, R2, R3,..., R15), wobei die Bearbeitungssequenz der Bearbeitungsvorgänge und die für jeden Bearbeitungsvorgang verwendete Elektrode unter Vorgabe folgender Kriterien ermittelt und ausgeführt wird:
a) Vorgabe von Prioritäten von zu bearbeitenden Werkstücken (10), einer Gruppe von Bearbeitungen (ARB 1, ARB 2, ARB 3, ARB 4), von einzelnen Bearbeitungen (ARB), von Arbeitszyklen (AZ) und/oder von Arbeitsschritten (AS) einer Bearbeitung (ARB); und
b) Vorgabe der Lebensdauer der für die einzelnen Bearbeitungen (ARB), Arbeitszyklen (AZ) und/oder Arbeitsschritte (AS) verwendeten Elektroden (R1, R2, R3, ... R15).

2. Verfahren nach Anspruch 1, **dadurch gekennzeichnet, daß** im Falle mehrerer gleicher Bearbeitungen die Bearbeitungsvorgänge auf die mehreren Bearbeitungen derart verteilt sind, daß eine gleichmäßige Verteilung des Elektrodenverschleißes auf eine bestimmte Anzahl von Arbeitszyklen und/oder Arbeitsschritten der mehreren Bearbeitungen erhalten wird.

3. Verfahren nach Anspruch 2, **dadurch gekennzeichnet, daß** die mehreren gleichen Bearbeitungen eines Verschleißverteilungsbereiches in einer bestimmten Reihenfolge nacheinander durchgeführt und nach Erreichen einer ersten oder letzten Bearbeitung in umgekehrter Reihenfolge so oft wiederholt werden, bis alle Arbeitsschritte der Bearbeitungen durchgeführt sind.

4. Verfahren nach Anspruch 2 oder 3, **dadurch gekennzeichnet, daß** der maximale Elektrodenverschleiß durch die maximale Anzahl von mit der Elektrode durchführbaren Arbeitszyklen oder Arbeitsschritte vorgegeben wird, wobei diese Anzahl gleichzeitig diejenige(n) Gruppe(n) (GR1, GR2, GR3, GR4) von Arbeitszyklen bzw. Arbeitsschritten festlegt, innerhalb welcher die Verschleißverteilungsstrategie angewendet wird.

5. Verfahren nach Anspruch 4, **dadurch gekennzeichnet, daß** innerhalb einer Gruppe von Arbeitszyklen nur ausgewählte Bereiche von Arbeitsschritten der Verschleißverteilungsstrategie unterzogen werden.

6. Verfahren nach einem der vorstehenden Ansprüche, **dadurch gekennzeichnet, daß** während der Bearbeitung die Anzahl der durchgeführten Arbeitszyklen oder Arbeitsschritte mitgezählt und erfaßt wird, und nach Erreichen des vorgegebenen maximalen Elektrodenverschleißes eine bestimmte Elektrode von der weiteren Bearbeitung ausgeschlossen oder in eine andere Elektrodenkategorie deklassiert wird.

7. Verfahren nach Anspruch 6, **dadurch gekennzeichnet, daß** in einem Verwaltungssystem der Steuerungsvorrichtung die Elektroden durch einen aktuellen Bearbeitungszustand beschrieben werden, wobei dieser Zustand in Abhängigkeit des Elektrodenverschleißes angepaßt wird.

8. Verfahren nach einem der vorstehenden Ansprüche, **dadurch gekennzeichnet, daß** die Daten zur Beschreibung der Elektroden in der Steuerungsvorrichtung unterteilt werden in:
- abstrakte Elektrodendaten zur Beschreibung einer Normelektrode (V1, V2), welche Informationen zur Ausführung eines bestimmten Bearbeitungsvorganges enthalten; und
- spezifische Elektrodendaten zur Korrektur und/oder Anpassung der abstrakten Elektrodendaten an die tatsächlich verwendete Elektrode (R1, R2) oder an maschinenspezifische Merkmale,
wobei die Elektrodenbeschreibung durch Verknüpfen der abstrakten Elektrodendaten mit den spezifischen Elektrodendaten gewonnen wird.

9. Verfahren nach Anspruch 8, **dadurch gekennzeichnet, daß** für eine Abfolge von Arbeitszyklen mit jeweils verschiedenen Arbeitsschritten innerhalb einer bestimmten Bearbeitung für jeden Arbeitszyklus und/oder jeden Arbeitsschritt eine Elektrode durch Kombination von abstrakten Elektrodendaten (virtuelle Elektrode) mit verschiedenen ausgewählten spezifischen Elektrodendaten (reelle Elektrode(n)) bestimmt wird.

10. Verfahren nach einem der vorstehenden Ansprüche, **dadurch gekennzeichnet, daß** die Bearbeitungssequenz vorrangig durch die Prioritäten bestimmt ist, welche den Werkstücken, Gruppen von Bearbeitungen und einzelnen Bearbeitungen innerhalb einer Gruppe zugeordnet sind (Strategie "Workpiece").

11. Verfahren nach einem der Ansprüche 1 bis 9, **dadurch gekennzeichnet, daß** die Bearbeitungssequenz von Bearbeitungen, die in mehreren Bearbeitungsphasen durchgeführt werden und in jeder Bearbeitungsphase die Arbeitsschritte einer Bearbeitung zu Arbeitszyklen zusammengefaßt sind, vorrangig davon bestimmt ist, daß alle Arbeitsschritte aller Bearbeitungen in vorgegebener Rangordnung der Bearbeitungsphasen durchgeführt werden, wobei
a) in jeder Bearbeitungsphase alle Arbeitsschritte von Anfang bis Ende einer Bearbeitung, dann alle Arbeitsschritte von Anfang bis Ende der nächsten Bearbeitung, usw. bis zur letzen Bearbeitung durchgeführt werden (Strategie "Phase 0"); oder
b) in jeder Bearbeitungsphase zunächst alle ersten Arbeitsschritte aller Bearbeitungen durchgeführt und sodann die übrigen Arbeitsschritte der Bearbeitungen wie unter a) abgearbeitet werden (Strategie "Phase 0").

12. Verfahren nach einem der Ansprüche 1 bis 9, **dadurch gekennzeichnet, daß** die Bearbeitungssequenz vorrangig durch die Priorität eines Werkstückes und der für das Werkstück vorgegebenen Strategie bestimmt ist (Strategie "Piece").

13. Verfahren nach einem der Ansprüche 1 bis 9, **dadurch gekennzeichnet, daß** die Bearbeitungssequenz vorrangig durch die Prioritäten bestimmt ist, welche einzelnen Arbeitsschritten zugeordnet sind (Strategie "Arbeitsschritt").

14. Verfahren nach Anspruch 10 und 11, **dadurch gekennzeichnet, daß** die Bearbeitungssequenz vorrangig durch die Strategie "Workpiece" bestimmt ist, wobei und die Werkstücke, die Gruppen bzw. die Bearbeitungen mit derselben Priorität nach der Strategie "Phase" oder "Phase 0" durchgeführt werden.

15. Verfahren nach einem der Ansprüche 10 und 11, **dadurch gekennzeichnet, daß** die Bearbeitungssequenz gemäß der Strategie "Phase" oder "Phase 0" insoweit beeinflußt wird, als die Abfolge der Arbeitsschritte und ggf. die Reihenfolge der Unterteilung der Verschleißverteilungs-Gruppen die Priorität der Bearbeitungen nach der Strategie "Workpiece" berücksichtigen.

16. Vorrichtung zur Steuerung einer Senkerosionsmaschine, auf welcher eine Vielzahl von Bearbeitungsvorgängen mit mehreren gleichen oder verschiedenen Elektroden (R1, R2, R3, ... R15) durchgeführt werden, mit:
- wenigstens einem Datenspeicher (24, 25) zum dauerhaften Speichern von Daten zur Beschreibung der Elektroden (R1, R2, R3, ... R15), die für die jeweiligen Bearbeitungsvorgänge benötigt werden;
- einer Benutzerschnittstelle zur Vorgabe von Prioritäten von zu bearbeitenden Werkstücken (10), einer Gruppe von Bearbeitungen (ARB 1, ARB 2, ARB 3, ARB 4), von einzelnen Bearbeitungen (ARB), von Arbeitszyklen (AZ) und/oder von Arbeitsschritten (AS) einer Bearbeitung (ARB); und zur Vorgabe der Lebensdauer der für die einzelnen Bearbeitungen (ARB), Arbeitszyklen (AZ) und/oder Arbeitsschritte (AS) verwendeten Elektroden (R1, R2, R3, ... R15); und
- einem Sequenzgenerator (26), der auf der Grundlage der genannten Vorgaben und den Elektrodendaten die geeignete Bearbeitungssequenz zur Durchführung der Vielzahl der Bearbeitungsvorgänge automatisch generiert.

17. Vorrichtung nach Anspruch 16, **gekennzeichnet durch** ein Verwaltungssystem, welches während der Bearbeitung die Anzahl der mit derselben Elektrode durchgeführten Arbeitszyklen oder Arbeitsschritte erfaßt und nach Erreichen der maximal erlaubten Arbeitszyklen bzw. Arbeitsschritte die Elektrode von der weiteren Bearbeitung ausschließt oder in eine andere Elektrodenkategorie deklassiert.

18. Vorrichtung nach Anspruch 17, **dadurch gekennzeichnet, daß** in einem Speicher des Verwaltungssystems die Elektroden durch einen aktuellen Bearbeitungszustand beschrieben werden, wobei dieser Zustand in Abhängigkeit des Elektrodenverschleißes angepaßt wird.

19. Vorrichtung nach einem der Ansprüche 16 bis 18, **gekennzeichnet durch**:
- jeweils wenigstens einem Datenspeicher (24, 25) zum dauerhaften Speichern von
(a) abstrakten Werkzeugdaten zur Beschreibung eines Normwerkzeuges (V1, V2), und
(b) spezifischen Werkzeugdaten zur Korrektur und/oder Anpassung der abstrakten Werkzeugdaten an das tatsächlich verwendete Werkzeug (R1, R2) oder an maschinenspezifische Merkmale; und
- wobei die Benutzerschnittstelle auch zum Verknüpfen der abstrakten Werkzeugdaten mit ausgewählten spezifischen Werkzeugdaten ausgelegt ist.

20. Vorrichtung nach Anspruch 19, **dadurch gekennzeichnet, daß** ferner jeweils ein Datenspeicher (28; 30, 31)) für Geometrie- und Konturdaten verschiedener Bearbeitungen und wenigstens eine Datenbank (30, 31) für Technologie- und Prozeßparametersätze zur Durchführung der Bearbeitungen vorgesehen sind, wobei der Sequenzgenerator (26) auf Grundlage der genannten Sequenzvorgaben, der abstrakten Elektrodendaten, der Geometrie- und Konturdaten und der Technologie- und Prozeßdaten automatisch eine Bearbeitungssequenz mit den zugehörigen Technologie- und Prozeßparametern ermittelt.

21. Vorrichtung nach Anspruch 19 oder 20, **gekennzeichnet durch** ein Interpolator (22), welche die spezifischen Elektrodendaten aus dem Datenspeicher ausliest und zur Korrektur der Werzeugbewegung verwendet.

## Claims

1. A method for controlling a plurality of machining operations on a die-sinking EDM machine having several identical or different electrodes (R1, R2, R3 ..., R15), whereby the machining sequence of the machining operations and the electrode used for each machining operation are determined and performed using the following prescribed criteria:
a) predefined priorities of workpieces (10) to be machined, of a group of machining jobs (ARB 1, ARB 2, ARB 3, ARB 4), of individual machining jobs (ARB), of operating cycles (AZ) and/or of work steps (AS) of a machining job (ARB); and
b) predefined service life of the electrodes (R1, R2, R3, ..., R15) used for the individual machining jobs (ARB), operating cycles (AZ) and/or work steps (AS).

2. A method according to Claim 1,
**characterised in that** in the event of multiple identical machining jobs, the machining operations are distributed over the multiple machining jobs in such a manner that an even distribution of the electrode wear over a specific number of operating cycles and/or work steps is obtained.

3. A method according to Claim 2,
**characterised in that** the multiple identical machining jobs of a wear distribution area are performed consecutively in a specific order and after a first or last machining job has been reached they are repeated in reverse order until all work steps of the machining jobs have been performed.

4. A method according to Claim 2 or 3,
**characterised in that** the maximum electrode wear is predetermined by the maximum number of operating cycles or work steps that can be performed with the electrode, whereby this number at the same time determines the group(s) (GR1, GR2, GR3, GR4) of operating cycles or work steps in which the wear distribution strategy is used.

5. A method according to Claim 4,
**characterised in that** within a group of operating cycles only selected parts of work steps are subjected to the wear distribution strategy.

6. A method according to one of the preceding Claims,
**characterised in that** during machining the number of performed operating cycles or work steps is counted and recorded, and after the predetermined maximum electrode wear has been reached, a specific electrode is excluded from further machining or is downgraded to another electrode category.

7. A method according to Claim 6,
**characterised in that** the electrodes are described in an administration system of the control device by a current machining status, with this status being adapted as a function of the electrode wear.

8. A method according to one of the preceding Claims,
**characterised in that** the data for describing the electrodes in the control device are divided into:
- abstract electrode data for describing a standard electrode (VI, V2), which contain information on performing a specific machining operation; and
- specific electrode data for the correction and/or adaptation of the abstract electrode data to the actually used electrode (R1, R2) or to machine-specific features,
whereby the electrode description is obtained by linking the abstract electrode data with the specific electrode data.

9. A method according to Claim 8,
**characterised in that** for a succession of operating cycles each having different work steps within a specific machining job for each operating cycle and/or each work step, an electrode is determined by combining abstract electrode data (virtual electrode) with various selected specific electrode data (real electrode(s)).

10. A method according to one of the preceding Claims,
**characterised in that** the machining sequence is as a matter of priority determined by the priorities which are assigned to the workpieces, groups of machining jobs and individual machining jobs within a group (the "workpiece" strategy).

11. A method according to one of Claims 1 to 9,
**characterised in that** the machining sequence of machining jobs, which are performed in several machining phases and in each machining phase the work steps of a machining job are combined into operating cycles, are determined as a matter of priority by the fact that all work steps of all machining jobs are performed in a predetermined hierarchy of the machining phases, whereby
a) in each machining phase all work steps are performed from the beginning to the end of a machining job, then all work steps are performed from the beginning to the end of the next machining job, etc. until the last machining job (the "phase 0" strategy); or
b) in each machining phase first all first work steps of all machining jobs are performed and then the remaining work steps of the machining jobs are completed as under a) (the "phase 0" strategy).

12. A method according to one of Claims 1 to 9,
**characterised in that** the machining sequence is determined as a matter of priority by the priority of a workpiece and the strategy predetermined for the workpiece (the "piece" strategy).

13. A method according to one of Claims 1 to 9,
**characterised in that** the machining sequence is determined as a matter of priority by the priorities which are assigned to individual work steps (the "work step" strategy).

14. A method according to Claim 10 and 11,
characterise in that the machining sequence is determined as a matter of priority determined by the workpiece strategy, whereby the workpieces, the groups or machining jobs are carried out with the same priority according to the "phase" or "phase 0" strategy".

15. A method according to one of Claims 10 and 11,
**characterised in that** the machining sequence according to the "phase" or "phase 0" strategy is influenced in so far as the order of the work steps and possibly the sequence of the division of the wear distribution groups take into consideration the priority of the machining jobs according to the "workpiece" strategy.

16. An apparatus for controlling a die-sinking EDM machine, on which a plurality of machining operations is performed with several identical or different electrodes (R1, R2, R3, ... R15), having:
- at least one data memory (24, 25) for the permanent storage of data for describing the electrodes (R1, R2, R3, ... R15), which are required for the respective machining operations;
- a user interface for predetermining priorities of workpieces (10) to be machined, of a group of machining jobs (ARB 1, ARB 2, ARB 3, ARB 4), of individual machining jobs (ARB), of operating cycles (AZ) and/or work steps (AS) of a machining job (ARB); and for predetermining the service life of the electrodes (R1, R2, R3, ... R15) used for the individual machining jobs (ARB), operating cycles (AZ) and/or work steps (AS); and
- a sequence generator (26), which automatically generates the suitable machining sequence for performing the plurality of machining operations on the basis of the mentioned predetermined priorities and the electrode data.

17. An apparatus according to Claim 16,
**characterised by** an administration system, which during machining detects the number of operating cycles or work steps carried out with the same electrode and after the maximum number of permitted operating cycles or work steps has been reached it prevents the electrode from further machining or downgrades it to another electrode category.

18. An apparatus according to Claim 17,
**characterised in that** in a memory of the administration system the electrodes are described by a current machining status, this status being adapted in dependence on the electrode wear.

19. An apparatus according to one of Claims 16 to 18,
**characterised by**:
- in each case at least one data memory (24, 25) for the permanent storage of
a) abstract tool data for describing a standard tool (V1, V2), and
b) specific tool data for correcting and/or adapting the abstract tool data to the actually used tool (R1, R2) or to machine-specific features;
- wherein the user interface is also designed to link the abstract tool data with selected specific tool data.

## Revendications

1. Procédé pour la commande d'une pluralité d'opérations d'usinage sur une machine d'enfonçage par électroérosion avec plusieurs électrodes (R1, R2, R3, ..., R15) identiques ou différentes, la séquence des opérations d'usinage et l'électrode utilisée pour chaque opération d'usinage étant déterminées et exécutées avec la spécification des critères suivants :
a) spécification de prioriuée de pièces d'oeuvre (10) à usiner, d'un groupe d'usinages (ARB 1, ARB 2, ARB 3, ARB 4), d'usinages (ARB) individuels, de cycles de travail (AZ) et/ou d'étapes de travail (AS) d'un usinage (ARB) ; et
b) justification de la durée de vie des électrodes (R1, R2, R3, - R15) utilisées pour les usinages (ARB), cycles de travail (AZ) et/ou étapes de travail (AS) individuels.

2. Procédé selon la revendication 1, **caractérisé en ce que**, dans le cas de plusieurs usinages identiques, les opérations d'usinage sont réparties entre les plusieurs usinages de telle sorte qu'une répartition uniforme de l'usure des électrodes entre un certain nombre de cycles de travail et/ou étapes de travail des plusieurs usinages est obtenue.

3. Procédé selon la revendication 2, **caractérisé en ce que** les plusieurs usinages identiques d'une zone de répartition d'usure sont effectués dans un certain ordre de succession et, après avoir atteint un premier ou un dernier usinage, sont répétés dans l'ordre de succession inversé jusqu'à ce que toutes les étapes de travail des usinages soient effectuées.

4. Procédé selon la revendication 2 ou 3, **caractérisé en ce que** l'usure d'électrodes maximale est prédéfinie par le nombre maximum de cycles de travail ou étapes de travail pouvant être effectués avec l'électrode, ce nombre définissant en même temps le (les) groupe(s) (GR1, GR2, GR3, GR4) de cycles de travail ou étapes de travail, à l'intérieur desquels la stratégie de répartition d'usure est appliquée.

5. Procédé selon la revendication 4, **caractérisé en ce que** seules des zones sélectionnées d'étapes de travail sont soumises à l'intérieur d'un groupe de cycles de travail à la stratégie de répartition d'usure.

6. Procédé selon l'une quelconque des revendications précédentes, **caractérisé en ce que**, pendant l'usinage, le nombre des cycles de travail ou étapes de travail effectués est compté et enregistré et, après avoir atteint l'usure d'électrode maximale prédéfinie, une électrode définie est exclue de l'usinage ultérieur ou déclassée dans une autre catégorie d'électrodes.

7. Procédé selon la revendication 6, **caractérisé en ce que**, dans un système de gestion du dispositif de commande, les électrodes sont décrites par un état d'usinage actuel, cet état étant adapté en fonction de l'usure des électrodes.

8. Procédé selon l'une quelconque des revendications précédentes, **caractérisé en ce que** les données pour la description des électrodes dans le dispositif de commande sont subdivisées en :
- données d'électrode abstraites pour la description d'une électrode standard (V1, V2), qui contiennent des informations pour l'exécution d'une opération d'usinage définie ; et
- données d'électrodes spécifiques pour la correction et/ou l'adaptation des données d'électrodes abstraites à l'électrode (R1, R2) réellement utilisée ou à des caractéristiques spécifiques à la machine,
la description des électrodes étant obtenue par combinaison des données d'électrodes abstraites avec les données d'électrodes spécifiques.

9. Procédé selon la revendication 8, **caractérisé en ce que**, pour une séquence de cycles de travail avec respectivement diverses étapes de travail au sein d'un usinage défini pour chaque cycle de travail et/ou chaque étape de travail, une électrode est définie par la combinaison de données d'électrodes abstraites (électrode virtuelle) avec différentes données d'électrodes spécifiques sélectionnées (électrode(s) réelle(s)).

10. Procédé selon l'une quelconque des revendications précédentes, **caractérisé en ce que** la séquence d'usinage est définie avant tout par les priorités, qui sont attribuées aux pièces, groupes d'usinages et à des usinages individuels à l'intérieur d'un groupe (stratégie "Workpiece").

11. Procédé selon l'une quelconque des revendications 1 à 9, **caractérisé en ce que** la séquence d'usinage d'usinages, qui sont effectués en plusieurs phases d'usinage, et les étapes de travail d'un usinage étant regroupées en cycles de travail dans chaque phase d'usinage, est définie en priorité par le fait que toutes les étapes de travail de tous les usinages sont effectuées dans un ordre de priorité prédéfini des phases d'usinage,
a) toutes les étapes de travail d'usinage du début jusqu'à la fin d'un usinage, ensuite toutes les étapes d'usinage depuis le début jusqu'à la fin de l'usinage suivant, etc., jusqu'au dernier usinage étant effectuées dans chaque phase d'usinage (stratégie "phase 0"), ou
b) d'abord toutes les premières étapes de travail de tous les usinages étant effectuées et ensuite les étapes de travail restantes des usinages étant traitées comme mentionné sous a) dans chaque phase d'usinage (stratégie "phase 0").

12. Procédé selon l'une quelconque des revendications 1 à 9, **caractérisé en ce que** la séquence d'usinage est définie dans la priorité d'une pièce d'oeuvre et de la stratégie prédéfinie pour la pièce d'oeuvre (stratégie "Pièce").

13. Procédé selon l'une quelconque des revendications 1 à 9, **caractérisé en ce que** la séquence d'usinage est définie avant tout par les priorités qui sont attribuées à des étapes de travail individuelles (stratégie "étape de travail").

14. Procédé selon les revendications 10 et 11, **caractérisé en ce que** la séquence d'usinage est définie en priorité par la stratégie "Workpiece", les pièces d'oeuvre, les groupes ou les usinages étant effectués avec la même priorité selon la stratégie "phase" ou "phase 0".

15. Procédé selon l'une quelconque des revendications 10 et 11, **caractérisé en ce que** la séquence d'usinage selon la stratégie "phase" ou "phase 0" est influencée dans le sens où la séquence des étapes de travail et éventuellement l'ordre de succession de la subdivision des groupes de répartition d'usure prennent en compte la priorité des usinages selon la stratégie "Workpiece".

16. Dispositif pour la commande d'une machine d'enfonçage par électroérosion, sur laquelle une pluralité d'opérations d'usinage est effectué avec plusieurs électrodes (R1, R2, R3, ... R15) identiques ou différentes, comprenant :
- au moins une mémoire de données (24, 25) pour la mémorisation permanente de données pour la description des électrodes (R1, R2, R3, R15), qui sont utilisées pour les opérations d'usinage respectives ;
- une interface utilisateur pour la spécification de priorités de pièces d'oeuvres (10) à usiner, d'un groupe d'usinages (ARB 1, ARB 2, ARB 3, ARB 4), d'usinages individuels (ARB), de cycles de travail (AZ) et/ou d'étapes de travail (AS) d'un usinage (ARB) ; et pour la spécification de la durée de vie des électrodes (R1, R2, R3, ... R15) utilisées pour les usinages (ARB), cycles de travail (AZ) et/ou étapes de travail (AS) individuels ; et
- un générateur de séquence (26), qui génère automatiquement sur la base des spécifications citées et des données d'électrodes la séquence d'usinage appropriée pour la mise en oeuvre de la grande quantité des opérations d'usinage.

17. Dispositif selon la revendication 16, **caractérisé par** un système de gestion, qui enregistre pendant l'usinage le nombre des cycles de travail ou d'étapes de travail effectuées avec la même électrode et, après avoir atteint le nombre maximum autorisé de cycles de travail ou d'étapes de travail, exclut l'électrode de l'usinage ultérieur ou la déclasse dans une autre catégorie d'électrodes.

18. Dispositif selon la revendication 17, **caractérisé en ce que**, dans une mémoire du système de gestion, les électrodes sont décrites par un état d'usinage actuel, cet état étant adapté en fonction de l'usure d'électrode.

19. Dispositif selon l'une quelconque des revendications 16 à 18, **caractérisé par** :
- respectivement au moins une mémoire de données (24, 25) pour la mémorisation permanente de
(a) données d'outil abstraites pour la description d'un outil standard (V1, V2), et
(b) des données d'outil spécifiques pour la correction et/ou l'adaptation des données d'outil abstraites à l'outil (R1, R2) réellement utilisé ou à des caractéristiques spécifiques à la machine ; et
- l'interface utilisateur étant conçue également pour la combinaison des données d'outil abstraites avec des données d'outil spécifiques sélectionnées.

20. Dispositif selon la revendication 19, **caractérisé en ce qu'**on prévoit également respectivement une mémoire de données (28 ; 30, 31) pour des données de géométrie et de contour de différents usinages et au moins une banque de données (30, 31) pour des ensembles de paramètres de technologie et de processus pour la réalisation des usinages, le générateur de séquence (26) déterminant sur la base des spécifications de séquence citées, des données d'électrodes abstraites, des données de géométrie et de contour et des données de technologie et de processus automatiquement une séquence d'usinage avec les paramètres de technologie et de processus spécifiques.

21. Dispositif selon la revendication 19 ou 20, **caractérisé par** un interpolateur (22), qui extrait les données d'électrodes spécifiques de la mémoire de données et les utilise pour la correction du déplacement d'outil.
